# EUROPÄISCHE PATENTANMELDUNG

(11) **EP 3 836 019 A1**
(43) Veröffentlichungstag der Anmeldung: **16.06.2021**
(21) Anmeldenummer: 19214373.3
(22) Anmeldetag: 09.12.2019
(51) Int. Cl.: G06K 9/03, G06K 9/62

(54) **VERFAHREN UND ASSISTENZSYSTEM ZUR ÜBERPRÜFUNG VON MUSTERN AUF FEHLERHAFTIGKEIT**

(71) Anmelder: Siemens Aktiengesellschaft, 80333 München (DE)
(72) Erfinder: Kehrer, Johannes, 81829 München (DE); Weber, Stefan Hagen, 81927 München (DE); Becher, Silvio, 81827 München (DE); Buggenthin, Felix, 81373 München (DE); Thon, Ingo, 85630 Grasbrunn (DE)

(57) **Zusammenfassung**

Die Erfindung beansprucht ein Verfahren zur Überprüfung von Mustern auf Fehlerhaftigkeit mittels einer Fehlererkennungseinrichtung, welche Bilddaten der zu überprüfenden Muster aufnimmt und mittels eines Fehlererkennungsalgorithmus jeweils die zu einem Muster gehörenden Bilddaten in eine vorgebbare Fehlerkategorie (K11 bis K26) klassifiziert, wobei als Klassifizierungsergebnis des Fehlererkennungsalgorithmus die Anzahl der in eine Fehlerkategorie klassifizierten Muster in einer mehrdimensionalen Konfusionsmatrix dargestellt wird,
dadurch gekennzeichnet,
- dass die zu einem Muster gehörenden Bilddaten ein Miniaturbild (M) bilden und entsprechend ihrer klassifizierten Fehlerkategorie eines die Fehlerkategorie repräsentierenden Segments (S) der Konfusionsmatrix zugeordnet und visuell dargestellt werden,
- und dass die Miniaturbilder, die durch eine Interaktion mit einem Benutzer (B) oder Bot in ein anderes Segment als dem zugeordneten Segment der Konfusionsmatrix zugeordnet werden, als Trainingsbilddaten für den Fehlererkennungsalgorithmus bereitgestellt und/oder ausgegeben werden.

## Beschreibung

Die Erfindung betrifft ein Verfahren und ein Assistenzsystem zur Überprüfung von Mustern auf Fehlerhaftigkeit mittels einer Fehlererkennungseinrichtung sowie ein zugehöriges Computerprogrammprodukt.

In der industriellen Produktion und Fertigung werden immer häufiger Methoden des Maschinellen Lernens eingesetzt, um automatisierte Entscheidungen treffen zu können. Ein Beispiel ist hierbei die Anwendung von Klassifizierungsverfahren auf aufgenommene Bilddaten von Mustern, die produzierte Teile repräsentieren können, um die Qualität der Muster automatisiert zu beurteilen und mangelhafte bzw. fehlerhafte Muster auszusortieren. Es werden die aufgenommenen Bilddaten anhand gemeinsamer Merkmale verschiedenen Klassen zugeordnet (z.B. "Teil OK", "Teil entsorgen", "Nacharbeit nötig"). Ein weiteres Anwendungsbeispiel ist die Klassifizierung von Zeitreihendaten von Sensoren. Eine Zeitreihe wird hierbei als ein Muster interpretiert, die letztendlich auch Daten liefern. Die Zeitreihen werden mit Hilfe eines Algorithmus klassifiziert (z.B. "normal", "Maschine hochfahren", "Verschleiß zu hoch", "abnormaler Betriebszustand"). Basierend auf dem Ergebnis des Klassifizierungsalgorithmus können Aktionen abgeleitet werden, z.B. die Maschine zu stoppen, Inspektion anzuordnen, Werkzeuge auszutauschen oder Maschinenparameter anzupassen. Die Klassifizierung erfolgt mit Hilfe eines Klassifizierungs- bzw. Fehlererkennungsalgorithmus z.B. Neuronales Netz, Support Vector Maschine, usw. Vorliegend wird unter Fehlerhaftigkeit nicht nur der Mangel bzw. Fehler am Muster selbst verstanden, sondern auch eine "fehlerhafte" Klassifizierung. Z.B. hätte anstatt in "Maschine hochfahren" in "abnormaler Betriebszustand" klassifiziert werden sollen.

Es ist möglich, folgende Verfahren zu verwenden:
- *Batch-Labeling*: eine Gruppe von Daten erhalten dasselbe Label, ohne auf die individuellen Daten zu schauen. Dabei werden Gruppen gebildet, welche mit hoher Wahrscheinlichkeit ausschließlich Mitglieder einer Klasse beinhalten (z.B. alle Daten aus einem Regelbetrieb ohne Vorfälle).
- *Einzel-Labeling*: Einem Experten werden nacheinander Datenpunkte zur Beurteilung präsentiert. Dies erfolgt meist ohne direkte unterstützende Kontext-Informationen (z.B. Visualisierung aller Zuordnungen) zu den anderen Klassen.

Bei Klassifizierungs- bzw. Fehlererkennungsalgorithmen ist das Anwenden des gelernten Algorithmus auf einen Datensatz üblich, für den man die korrekten Klassen kennt, welcher aber selbst nicht für das Training des Algorithmus verwendet wurde. Damit kann man das Ergebnis des Algorithmus mit der sogenannten Grundwahrheit (*Ground Truth*) vergleichen. Metriken wie z.B. Präzision, Trefferquote, Genauigkeit oder F-Maß geben Hinweise auf die Güte des Algorithmus. Eine gängige Darstellung ist hierbei die Konfusionsmatrix, in der die Anzahl der richtig bzw. falsch klassifizierten Daten abgelesen werden kann.
Beispiele für Konfusionsmatrizen sind aus den Patentveröffentlichungen US 9020237 B2, US 8611675 B2, EP 2277143 A2 bekannt.

Der Evaluator erhält hierbei eine quantitative Einsicht in die Güte des Algorithmus. Es ist jedoch für einen Domänenexperten unerlässlich, die zugehörigen Bilder/Zeitreihen im Detail zu betrachten, um tiefere Erkenntnisse darüber zu erlangen, warum die Daten falsch oder richtig klassifiziert wurden.
Es ist möglich, dass ein Domänenexperte die unbekannten bzw. unklassifizierten Bilddaten übersichtlich präsentiert werden, um die Bilddaten selbst zu klassifizieren. Mit den klassifizierten Bilddaten erhält man ein initiales Trainingsset.
Um die Vorhersagegüte des Klassifizierungs- bzw. Fehlererkennungsalgorithmus beurteilen zu können, ist eine Evaluation des Algorithmus nach der Trainingsphase sinnvoll. Oft ist es jedoch schwierig, zu entscheiden, ob die Qualität der Klassifizierung hinreichend ist. Zudem wird die Evaluation oft nicht vom Entwickler des Klassifizierungs- bzw. Fehlererkennungsalgorithmus ausgeführt, welcher den mathematischen Hintergrund hat, sondern von Domänenexperten. Diese verfügen meist über die Expertise, die Bilder bzw. Bilddaten von Mustern oder auch Zeitreihen selbst semantisch zu verstehen, zu klassifizieren und ihr Wissen mit den Ergebnissen des Fehlererkennungsalgorithmus zu vergleichen. Muster können hierbei unterschiedliche ggf. zu produzierende Teile z.B. Gehäuse, Schraube, Zahnrad etc. sein. Es sind auch Objekte wie z.B. Blutzellen in der Medizin denkbar, die nach deren Typ erkannt und entsprechend klassifiziert werden können. Dazu müssen die Bilddaten dem Evaluator mit ihrer jeweiligen Klassifikation übersichtlich dargestellt werden. Erst mit dem Domänenwissen des Experten kann der Fehlererkennungsalgorithmus evaluiert und verbessert werden. Der optimierte Fehlererkennungsalgorithmus kann nun automatisiert im industriellen Prozess eingesetzt werden.

Im laufenden Betrieb muss ein Domänenexperte in der Lage sein, vom Algorithmus falsch klassifizierte Daten zu erkennen. Diese kann er dann mit dem richtigen Label an den Algorithmus zurückmelden. Das Modell wird dadurch kontinuierlich verbessert.

Das zu lösende Problem ist also einen Domänenexperten bestmöglich zu befähigen, Daten initial zu labeln bzw. zu klassifizieren, die Güte des Algorithmus zu beurteilen, und im laufenden Betrieb zu überwachen, obwohl für ihn der Fehlererkennungsalgorithmus oft eine "Black-Box" ist.

Es ist somit die Aufgabe der vorliegenden Erfindung die Überprüfung von Mustern auf Fehlerhaftigkeit bzw. korrekte Klassifizierung zu verbessern.

Die Aufgabe wird durch die in den unabhängigen Ansprüchen beschriebenen Merkmale gelöst. In den abhängigen Ansprüchen sind vorteilhafte Weiterbildungen der Erfindung dargestellt.

Die Erfindung beansprucht ein Verfahren zur Überprüfung von Mustern auf Fehlerhaftigkeit mittels einer Fehlererkennungseinrichtung, welche Bilddaten der zu überprüfenden Muster aufnimmt und mittels eines Fehlererkennungsalgorithmus jeweils die zu einem Muster gehörenden Bilddaten in eine vorgebbare Fehlerkategorie, ggf. nach einer Rangfolge, klassifiziert, wobei als Klassifizierungsergebnis des Fehlererkennungsalgorithmus die Anzahl der in eine Fehlerkategorie klassifizierten Muster in einer mehrdimensionalen Konfusionsmatrix dargestellt wird,
dadurch gekennzeichnet,
- dass die zu einem Muster gehörenden Bilddaten ein Miniaturbild bilden und entsprechend ihrer klassifizierten Fehlerkategorie einem die Fehlerkategorie repräsentierenden Segment der Konfusionsmatrix zugeordnet und visuell dargestellt werden,
- und dass die Miniaturbilder, die durch eine Interaktion mit einem Benutzer oder Bot in ein anderes Segment als dem zugeordneten Segment der Konfusionsmatrix zugeordnet werden, als Trainingsbilddaten für den Fehlererkennungsalgorithmus bereitgestellt und/oder ausgegeben werden.

Diese Verfahren kann - wie eingangs beschrieben - initial, und/oder zur Evaluierung der Zuordnung und/oder während der Laufzeit verwendet bzw. durchgeführt werden. Die Fehlerkategorien können sowohl die Anzahl als auch die Art des Fehlers beschreiben. Es ist möglich eine Fehlerkategorie als "unbekannt" bzw. "nicht klassifiziert" zu bezeichnen, insbesondere dann, wenn der Fehlererkennungsalgorithmus initial abläuft.

Wenn die Konfusionsmatrix zweidimensional ausgebildet ist, dass dann können auf der horizontalen Achse die Fehlerkategorien des Benutzers bzw. Domänenexperten bzw. Evaluators gegebenenfalls in einer Rangfolge angeordnet aufgetragen sein. Auf der vertikalen Achse können sich initial entweder die Kategorie "nicht klassifiziert" und/oder die Fehlerkategorien ggf. in einer Rangfolge sortiert des Fehleralgorithmus finden.

Eine Übereinstimmung zwischen dem Ergebnis des Fehleralgorithmus und des Benutzers oder ggf. Bots. ist dann üblicherweise auf der Diagonalen der Konfusionsmatrix zu finden.

Im einem möglichen Anwendungsfall in der robotergesteuerten Prozessautomatisierung übernehmen Software-Roboter, auch Bots genannt, die Rollen und Aufgaben von Benutzern und interagieren mit anderen Softwaresystemen. Entgegen einer ersten reflexhaften Annahme sind Software-Roboter aber keine physisch existenten Maschinen, wie man sie aus der Fertigungsindustrie kennt. Es handelt sich vielmehr um Software-Anwendungen, die eine menschliche Interaktion mit Benutzerschnittstellen von Softwaresystemen nachahmen und damit automatisieren. Mögliche Ausführungsformen der Erfindung sind:
Die Größe der Miniaturbildern kann so angepasst werden, dass die einem Segment zugeordneten Miniaturbilder in das Segment optisch hineinpassen.

In der Konfusionsmatrix kann die Größe des Miniaturbildes nach Auswahl desselben einzeln angepasst werden, z.B. durch Zoom, Lupe/Fischauge, neues Fenstern etc.

Die Anzahl der Miniaturbilder innerhalb eines Matrixsegments kann optisch kenntlich gemacht werden, z.B. durch Anzeige einer Zahl mittels Mausauswahl oder Farbe/Farbtiefe innerhalb eines vorgebbaren Mengenintervalls.

Die Miniaturbilder können nach zumindest einem vorgebbaren Kriterium sortiert innerhalb eines (Matrix-)Segments der Konfusionsmatrix positioniert werden, wobei das Kriterium sein kann: Label und/oder Wahrscheinlichkeit der korrekten Klassifizierung, Entropie über alle Fehlerkategorien, Dimensionsreduktion, Ähnlichkeits- oder Distanzmetrik, zufällig etc.
Die Zuordnung eines oder mehrere Miniaturbilder von einem klassifizierten Segment in ein anderes Segment der Konfusionsmatrix kann durch Vergleich von ausgewählten oder auswählbaren Miniaturbildregionen anhand des zumindest einem Kriterium durchgeführt werden.
Die Anwendung des oben erläuterten Verfahrens bringt folgende Vorteile mit sich:
Durch die übersichtliche Darstellung in einer "bildhaften" Konfusionsmatrix, können visuell Fehler effizient und sicher erkannt werden, sobald Miniaturbilder der Muster in der Konfusionsmatrix eingebettet sind. Weitere Indikatoren sind leicht visuell zu identifizieren, z.B.
1. Die Anordnung der Miniaturbilder innerhalb eines Matrixsegments nach Wahrscheinlichkeit, in der "richtigen" Fehlerkategorie zugeordnet zu sein, oder anderen Kriterien.
2. Die Größe der Miniaturbilder ist an das jeweilige Segment angepasst.
3. Hintergrund-Farbe der Segmente kann weitere Informationen anzeigen.
4. Bilder können interaktiv vergrößert werden (Vergrößerungslinse innerhalb der Matrix, Bildvergrößerung außerhalb der Matrix).
5. Verknüpfung zwischen Miniaturbild und vergrößertem Bild mittels visueller Hervorhebung.
6. Markierung der relevanten Regionen in den Bildern.
7. Änderung der korrekten Klassifikation per Dragand-Drop innerhalb einer Matrixspalte.
8. Parameteränderungen führen zu einer Aktualisierung der Visualisierung.

Ein weiterer Aspekt der Erfindung betrifft ein Assistenzsystem zur Überprüfung von Mustern auf Fehlerhaftigkeit mittels einer Fehlererkennungseinrichtung, welche Bilddaten der zu überprüfenden Muster aufnimmt und mittels eines Fehlererkennungsalgorithmus jeweils die zu einem Muster gehörenden Bilddaten in eine vorgebbare Fehlerkategorie klassifiziert, wobei als Klassifizierungsergebnis des Fehlererkennungsalgorithmus die Anzahl der in eine Fehlerkategorie klassifizierten Muster in einer mehrdimensionalen Konfusionsmatrix darstellbar ist, aufweisend zumindest eine Verarbeitungseinheit mit zumindest einer Speichereinheiten, wobei die Verarbeitungseinheit dazu ausgebildet ist,
- aus den zu einem Muster gehörenden Bilddaten ein Miniaturbild zu bilden und entsprechend ihrer klassifizierten Fehlerkategorie einem die Fehlerkategorie repräsentierenden Segment der Konfusionsmatrix zuzuordnen und visuell darzustellen,
- und die Miniaturbilder, die durch eine Interaktion mit einem Benutzer oder Bot in ein anderes Segment als dem genannten Segment der Konfusionsmatrix zugeordnet werden, als Trainingsbilddaten für den Fehlererkennungsalgorithmus in der zumindest einen Speichereinheit bereitzustellen und/oder an einer Ausgabeeinheit, beispielsweise ein Display oder Tablett etc., auszugeben.

Die Zuordnung zu den Segmenten kann durch eine Bewertungseinheit durch- bzw. ausgeführt werden. Die oben genannten Einheiten können hardware-, firmware- und softwaremäßig ausgestaltet sein.

Weiterbildungen und Ausführungsformen zum oben erläuterten Verfahren gelten analog für das Assistenzsystem bzw. - vorrichtung.

In einem weiteren Aspekt betrifft die Erfindung ein Computerprogrammprodukt umfassend ein nicht vorübergehendes computerlesbares Medium, das direkt in einen Speicher eines digitalen Computers ladbar ist, umfassend Programmcodeteile, die dazu geeignet sind, die Schritte des beschriebenen Verfahrens durchzuführen.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Unter einem Prozessor kann im Zusammenhang mit der Erfindung beispielsweise ein Computer, eine Maschine oder eine elektronische Schaltung verstanden werden. Auch kann unter einem Prozessor ein virtualisierter Prozessor, der beispielsweise in einem durch viele Nutzer geteilten Server, auch als Cloud bezeichnet, ausgebildet sein. Eine jeweilige "Einheit", zum Beispiel die Abbildungseinheit oder Nachbildeeinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung zum Beispiel als Computer, als Teil eines Computers wie beispielsweise eine Graphikkarte oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ein Computerprogrammprodukt kann beispielsweise als Speichermedium, wie zum Beispiel eine Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens sowie der Assistenzvorrichtung sind in den Zeichnungen beispielhaft dargestellt und werden anhand der nachfolgenden Beschreibung näher erläutert. Es zeigen:
- Figur 1: ein Ausführungsbeispiel des erfindungsgemäßen Verfahrens als Flussdiagramm;
- Figur 2: bis 5 verschiedene Ausführungsformen einer Konfusionsmatrix, in deren Segmenten Miniaturbilder visuell dargestellt werden.
- Figur 6: eine Konfusionsmatrix mit Zeitreihendaten, die von einem Sensor stammen, und
- Figur 7: beispielhaft eine Fertigungsumgebung.

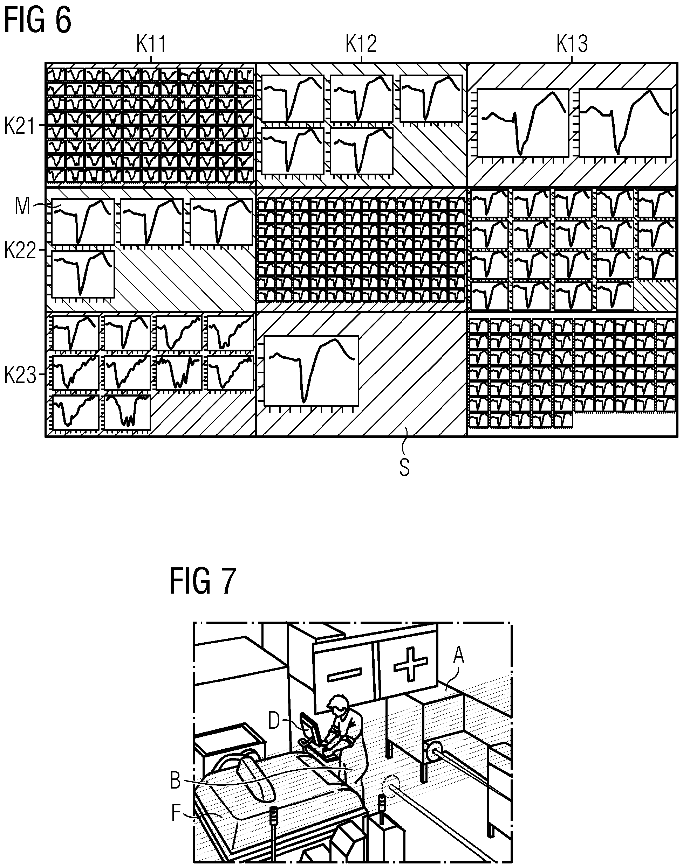

Figur 7 zeigt eine Fertigungsumgebung. Ein Assistenzsystem A, das eine Verarbeitungseinheit z.B. Prozessor und zumindest eine Speichereinheit aufweist, kann beispielsweise in einer Fertigungsumgebung eingesetzt werden, um folgende Schritte zu unterstützen bzw. auszuführen. In Schritt 1 kann eine nicht dargestellte Fehlererkennungseinrichtung, die auch als ein Edge Device ausgebildet sein kann, zum Assistenzsystem A eine Verbindung aufbauen oder in das Assistenzsystem anderweitig integriert sein. In Schritt 2 wird eine Kamera bzw. ein anderes Bildaufnahmegerät mit der Fehlererkennungseinrichtung verbunden. Einem Benutzer B kann das Klassifizierungsergebnis eines Fehlererkennungsalgorithmus an einer Ausgabevorrichtung z.B. in Form eines Displays D nahe einer Fertigungsmaschine F angeordnet angezeigt werden.

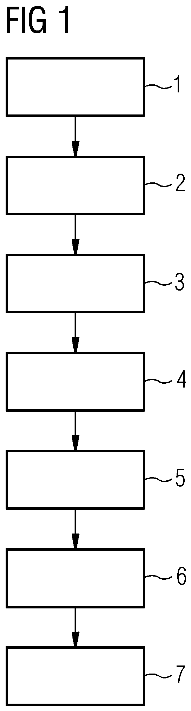

In Figur 1 wird ein Ablaufdiagramm zum erfindungsgemäßen Vorgehen gezeigt, wobei die Schritte mit 1 bis 7 gekennzeichnet sind.

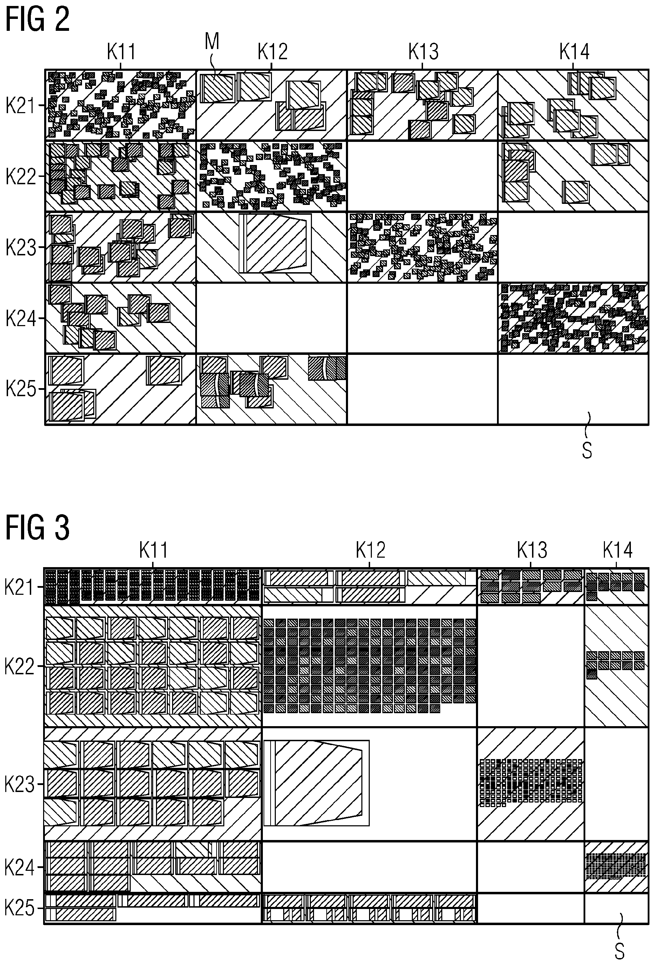

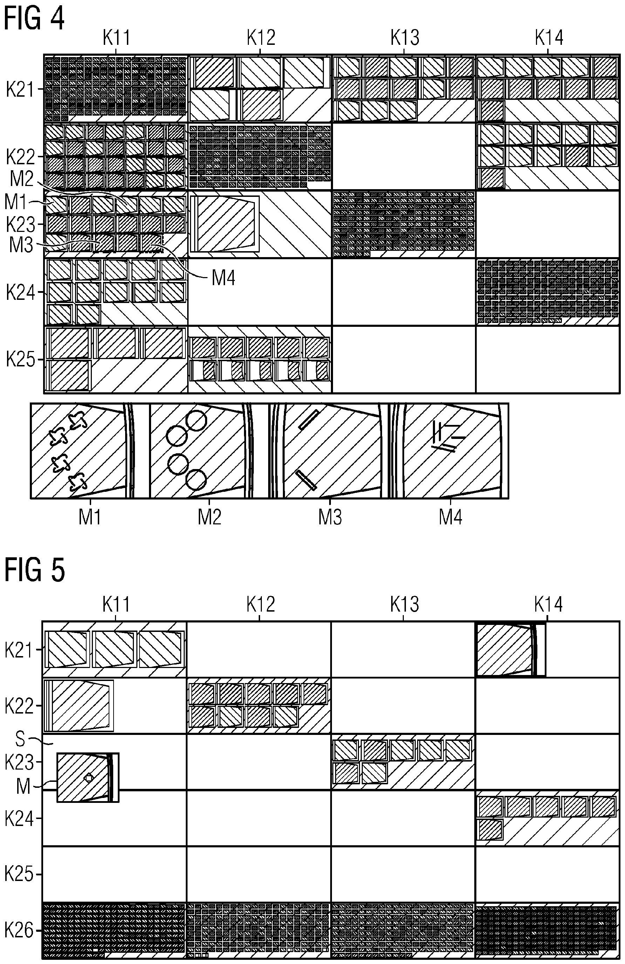

In Schritt 3 kann ein Trainingsmodus gestartet werden, in dem der Fehlererkennungsalgorithmus, der in Form eines intelligenten, Lernalgorithmus z.B. ein Neuronales Netz ausgestattet sein kann, eine Datenklassifizierung leitet. Der Benutzer oder ein Bot liefert im Beispiel markierte Bilddaten, die von einem Muster aufgenommen wurden, die in eine vorgebbare Fehlerkategorie klassifiziert bzw. zugewiesen sind. Erfindungsgemäß wird eine mehrdimensionale Konfusionsmatrix eingesetzt, wobei auf jeder Achse bzw. Dimension - ggf. in einer Rangfolge sortiert - Fehlerkategorien aufgetragen sind. Beispielhaft können gemäß Figur 1 die dort mit K11 bis K14 gekennzeichneten Fehlerkategorien beispielsweise wie folgt lauten: "erhöhte Fläche", "Fehler/Löcher im Material", "Teilstück fehlt" und "normal". Die vertikale y-Achse wäre dann dem Benutzer zuzuordnen. Auf der horizontalen x-Achse sind die Fehlerkategorien K11 bis K15 mit "erhöhte Fläche", "Fehler/Löcher im Material", "Teilstück fehlt" und "normal" angeordnet, wobei Fehlerkategorie K14 zusätzlich "andere" bzw. "nicht klassifiziert" oder "unbekannt" repräsentiert. Die vertikale y-Achse wäre eine initiale Startlösung für den Fehlererkennungsalgorithmus oder schon ein Fehlerklassifizierungsergebnis, wenn der Fehleralgorithmus zuvor schon einmal durchgelaufen ist. Die Bilddaten werden in Form von Miniaturbildern M von den jeweiligen Mustern den Segmenten der Konfusionsmatrix zugeordnet und visuell dargestellt. In den Figuren 2, 3 und 5 ist eines von den vielen Miniaturbilder mit M gekennzeichnet. In Figur 4 sind die Miniaturbilder M1, M2, M3, M4 umrandet dargestellt und entsprechend vergrößert unterhalb der Konfusionsmatrix angeordnet angedeutet, wobei diese in seinem separaten Fenster oder einem separaten Display gezeigt werden können. Eine Übereinstimmung zwischen dem Ergebnis des Fehleralgorithmus und des Benutzers oder ggf. Bots. ist dann auf der Diagonalen der Konfusionsmatrix zu finden. Die Miniaturbilder, die durch eine Interaktion mit dem Benutzer B oder Bot in ein anderes Segment als dem zugeordneten Segment der Konfusionsmatrix zugeordnet werden, als Trainingsbilddaten für den Fehlererkennungsalgorithmus in der zumindest einen Speichereinheit bereitgestellt und/oder an einer Ausgabeeinheit z.B. Display D ausgegeben werden.

Sofern vorhanden, kann in Schritt 4 ein schon vortrainiertes Modell für den Fehleralgorithmus verwendet werden. Dieses vortrainierte Modell könnte mit Fehlerkategorien evtl. durch eine weitere z-Achse in der Tiefe repräsentiert werden.

In Schritt 5 wird ein Training des Fehlererkennungsalgorithmus mit Hilfe des Inhalts der Konfusionsmatrix bzw. Trainingsbilddaten durchgeführt, wobei in Schritt 6 das trainierte Modell in die Fehlererkennungseinheit eingebracht wird. In Schritt 7 kann letztendlich eine Überprüfung von Mustern auf Fehlerhaftigkeit mittels der Fehlererkennungseinrichtung während eine Fertigungsmaschine F läuft (online) oder im Nachgang zum Fertigungsprozess (postprocessing/Nachverarbeitung) ausführt werden.

Die Figuren 2 bis 6 zeigen verschiedene Ausführungsformen von einer Konfusionsmatrix. Im Beispiel ist diese zweidimensional ausgelegt. Die zu einem Muster gehörenden Bilddaten bilden ein Miniaturbild (englisch: Thumbnails) bilden und werden entsprechend ihrer klassifizierten Fehlerkategorie K11 bis K26 eines die Fehlerkategorie repräsentierenden Segments S der Konfusionsmatrix zugeordnet und visuell dargestellt werden.
In den Figuren 2 bis 6 ist die Größe der Miniaturbilder so anpasst, dass die einem Segment zugeordneten Miniaturbilder in das Segment optisch hineinpassen. Dabei können die Miniaturbilder - wie in Figur 2 gezeigt - unsortiert in einem Segment liegen oder sie sind nach einem bestimmten Kriterium sortiert im Segment angeordnet - wie es in den Figuren 3 bis 5 ersichtlich ist. Ein mögliches Kriterium ist die Wahrscheinlichkeit (siehe z.B. Figur 3: 0,94) der Zugehörigkeit zu dieser Fehlerkategorie, auch als Vertrauensfaktor (englisch Confidence factor) bezeichnet. Es sind andere Kriterien wie z.B. Entropie über alle Fehlerkategorien, Dimensionsreduktion, Ähnlichkeits- oder Distanzmetrik, zufällig etc. denkbar.
In Figur 4 ist angedeutet, dass ein Miniaturbild M durch eine Interaktion (z.B. "Drag and Drop" mit der Maus oder Auswahl mit Hilfe von Lassowerkzeugen etc.) mit einem Benutzer oder Bot in ein anderes Segment als dem zugeordneten Segment S der Konfusionsmatrix zugeordnet werden kann. Die Zuordnung eines oder mehrere Miniaturbilder von einem zugeordneten bzw. klassifizierten Segment in ein anderes Segment der Konfusionsmatrix kann durch Vergleich von ausgewählten oder auswählbaren Miniaturbildregionen anhand zumindest eines Kriteriums durchgeführt werden. So ein Kriterium kann ein schlechter Confidence-Wert, ähnliche Helligkeit des Bildes, visuell ähnliche Form der Muster, erkennbare Fehler wie Schweißspritzen, Kratzer etc. sein.

Insbesondere Miniaturbilder M, die der Fehlerkategorie "nicht klassifiziert" initial zugeordnet sind oder vom Fehlererkennungsalgorithmus nicht zugeordnet werden konnten und deshalb in der Fehlerkategorie "unbekannt" liegen, sind vom Benutzer einer der anderen Fehlerkategorien zuzuordnen. Die Fehlerkategorien auf einer Achse der Konfusionsmatrix können nach einer vorgebbaren Rangfolge angeordnet sein.

In den Figuren 2 bis 6 sind verschiedene Hintergrundschraffuren der Segmente der Konfusionsmatrix zu erkennen. Somit kann die Anzahl der Miniaturbilder innerhalb eines Segments optisch kenntlich gemacht werden. Diese Schraffuren z.B. "enger Abstand der Striche" (= dunkel) bzw. "breiter Abstand der Striche" (= hell) können t unterschiedlichen Helligkeitsstufen einer Farbe repräsentieren. Beispielsweise würde die Farbe "grün" - beispielsweise in Figur 5 in den Segmenten (K11;21), (K12;K22), (K13; K23), (K14; K24) - andeuten, dass die in diesem Segment gezeigten Miniaturbilder korrekt zugeordnet bzw. klassifiziert sind. "Dunkelgrün" könnte andeuten, dass eine hohe Anzahl (innerhalb eines vorgebbaren Intervalls) von Miniaturbildern korrekt zugeordnet sind. Abgestuft bis "hellgrün" nimmt die Anzahl der korrekt zugeordneten Miniaturbilder innerhalb eines Segments ab. Die Farbe "blau" - z.B. in Figur 5 in Segmenten (K13; K21), (K14; K21), (K14; K22), (K11; K23), (K11; K24), (K12; K25) - mit ihren Helligkeitsabstufungen analog zu "grün" könnte andeuten, dass die Miniaturbilder innerhalb dieses Segments nicht korrekt zugeordnet sind. Eine Farbe "lila" könnte eine Art "Zwischenstufe" zwischen korrekt zugeordneten Miniaturbildern und nicht korrekt (falsch) zugeordneten Miniaturbildern darstellen. Es sind auch andere Farbkombination vorstellbar. Ebenso könnte anstatt einer Hintergrundschraffur - bzw. Farbe auch die Umrahmung eines Segments entsprechend optisch kenntlich gemacht werden.
In Figur 4 sind mit den Miniaturbildern M1 bis M4 beispielhaft gezeigt, dass eine Auswahl an Miniaturbilder vergrößert werden können. Dazu sind Vergrößerungstechniken wie Fischauge, Lupe, Zoom, neues Fenster oder Darstellung auf einem anderen Display möglich.

Figur 6 zeigt eine Konfusionsmatrix, in der Zeitreihendaten von Sensoren klassifiziert sind. So können anstatt eines Bildaufnahmegeräts auch Sensoren Daten liefern, die in der Konfusionsmatrix visuell dargestellt werden. Eine Zeitreihe wird hierbei als ein Muster interpretiert. Oben genannte Ausführungsformen können auch auf diese Konfusionsmatrix angewandt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Überprüfung von Mustern auf Fehlerhaftigkeit mittels einer Fehlererkennungseinrichtung, welche Bilddaten der zu überprüfenden Muster aufnimmt und mittels eines Fehlererkennungsalgorithmus jeweils die zu einem Muster gehörenden Bilddaten in eine vorgebbare Fehlerkategorie (K11 bis K26) klassifiziert, wobei als Klassifizierungsergebnis des Fehlererkennungsalgorithmus die Anzahl der in eine Fehlerkategorie klassifizierten Muster in einer mehrdimensionalen Konfusionsmatrix dargestellt wird,
**dadurch gekennzeichnet,**
- **dass** die zu einem Muster gehörenden Bilddaten ein Miniaturbild (M) bilden und entsprechend ihrer klassifizierten Fehlerkategorie eines die Fehlerkategorie repräsentierenden Segments (S) der Konfusionsmatrix zugeordnet und visuell dargestellt werden,
- und **dass** die Miniaturbilder, die durch eine Interaktion mit einem Benutzer (B) oder Bot in ein anderes Segment als dem zugeordneten Segment der Konfusionsmatrix zugeordnet werden, als Trainingsbilddaten für den Fehlererkennungsalgorithmus bereitgestellt und/oder ausgegeben werden.

2. Verfahren nach dem vorhergehenden Anspruch, **dadurch gekennzeichnet, dass** die Größe der Miniaturbilder so anpasst wird, dass die einem Segment zugeordneten Miniaturbilder in das Segment optisch hineinpassen.

3. Verfahren nach einem der vorhergehenden Ansprüche, **dadurch gekennzeichnet, dass** die Größe des Miniaturbildes nach Auswahl desselben einzeln angepasst werden kann.

4. Verfahren nach einem der vorhergehenden Ansprüche, **dadurch gekennzeichnet, dass** die Anzahl der Miniaturbilder innerhalb eines Segments optisch kenntlich gemacht wird.

5. Verfahren nach einem der vorhergehenden Ansprüche, **dadurch gekennzeichnet, dass** die Miniaturbilder nach zumindest einem vorgebbaren Kriterium sortiert innerhalb eines Segments der Konfusionsmatrix positioniert werden.

6. Verfahren nach einem der vorhergehenden Ansprüche, **dadurch gekennzeichnet, dass** die Zuordnung eines oder mehrere Miniaturbilder von einem zugeordneten Segment in ein anderes Segment der Konfusionsmatrix durch Vergleich von ausgewählten oder auswählbaren Miniaturbildregionen anhand des zumindest einem Kriterium durchgeführt wird.

7. Assistenzsystem (A) zur Überprüfung von Mustern auf Fehlerhaftigkeit mittels einer Fehlererkennungseinrichtung, welche Bilddaten der zu überprüfenden Muster aufnimmt und mittels eines Fehlererkennungsalgorithmus jeweils die zu einem Muster gehörenden Bilddaten in eine vorgebbare Fehlerkategorie klassifiziert, wobei als Klassifizierungsergebnis des Fehlererkennungsalgorithmus die Anzahl der in eine Fehlerkategorie (K11 bis K26) klassifizierten Muster in einer mehrdimensionalen Konfusionsmatrix darstellbar ist, aufweisend zumindest eine Verarbeitungseinheit mit zumindest einer Speichereinheiten, wobei die Verarbeitungseinheit dazu ausgebildet ist,
- aus den zu einem Muster gehörenden Bilddaten ein Miniaturbild (M) zu bilden und entsprechend ihrer klassifizierten Fehlerkategorie einem die Fehlerkategorie repräsentierenden Segment der Konfusionsmatrix zuzuordnen und visuell darzustellen,
- und die Miniaturbilder, die durch eine Interaktion mit einem Benutzer (B) oder Bot in ein anderes Segment als dem zugeordneten Segment der Konfusionsmatrix zugeordnet werden, als Trainingsbilddaten für den Fehlererkennungsalgorithmus in der zumindest einen Speichereinheit bereitzustellen und/oder an einer Ausgabeeinheit (D) auszugeben.

8. Vorrichtung nach dem vorhergehenden Anspruch, **dadurch gekennzeichnet, dass** die Miniaturbilder nach zumindest einem vorgebbaren Kriterium sortiert innerhalb eines Segments positionierbar sind.

9. Verfahren nach einem der vorhergehenden Ansprüche 7 oder 8, **dadurch gekennzeichnet, dass** die Anzahl der Miniaturbilder innerhalb eines Segments optisch kenntlich machbar ist.

10. Computerprogrammprodukt, das in einen Speicher eines Assistenzsystems, insbesondere nach Anspruch 7, ladbar ist, umfassend Programmcodeteile, die dazu ausgelegt sind, das Verfahren nach einem der vorhergehenden Verfahrensansprüchen auszuführen.
